# EUROPÄISCHE PATENTSCHRIFT

(11) **EP 2 678 125 B1**
(45) Veröffentlichungstag und Bekanntmachung des Hinweises auf die Patenterteilung: **17.12.2014**
(21) Anmeldenummer: 12703064.1
(22) Anmeldetag: 02.02.2012
(51) Int. Cl.: B21C 47/32, B65B 27/06, B65B 69/00

(54) **VORRICHTUNG UND VERFAHREN ZUR ENTNAHME EINER PROBE VON EINEM COIL**
METHOD AND DEVICE FOR REMOVING A SAMPLE FROM A COIL
DISPOSITIF ET PROCÉDÉ DE PRÉLÈVEMENT D'UN ÉCHANTILLON D'UNE BOBINE

(30) Priorität: 23.02.2011 DE 102011012192; 01.04.2011 DE 102011015896; 14.06.2011 DE 102011077461
(43) Veröffentlichungstag der Anmeldung: 01.01.2014
(73) Patentinhaber: SMS Siemag AG, 40237 Düsseldorf (DE)
(72) Erfinder: BOHN, Andreas, 57271 Hilchenbach (DE); BÄUMER, Klaus, 57223 Kreuztal (DE); RUNKEL, Thomas, 57074 Siegen (DE)
(74) Vertreter: Klüppel, Walter
(86) Internationale Anmeldenummer: PCT/EP2012/051744
(87) Internationale Veröffentlichungsnummer: WO 2012/113631

(56) Entgegenhaltungen:
- EP-A1- 0 497 182
- EP-A2- 0 044 923
- EP-B1- 1 888 284
- DE-A1- 2 815 969
- DE-A1- 2 924 379
- DE-A1- 4 411 905
- DE-A1-102007 017 383
- GB-A- 2 068 796
- JP-A- 08 267 134

## Beschreibung

### Technisches Gebiet

Die vorliegende Erfindung betrifft eine Vorrichtung sowie ein Verfahren zur Entnahme einer Probe von einem Coil, insbesondere von einem Metallbandcoil.

### Stand der Technik

In einem Walzwerk ist es bei der Herstellung von gewalzten Metallbändern üblich, diese nach dem Abschluss des Walzvorganges zu Coils - auch Bünde oder Spulen genannt - aufzuwickeln. Auf einem Coil befindet sich entsprechend ein langer, ungeschnittener Abschnitt eines gewalzten Metallbandes. Metallbandcoils haben dabei typischer Weise Gewichte von bis zu 40 Tonnen, so dass zur sicheren Handhabung der Coils entsprechende massive Vorrichtungen vonnöten sind.

Um die Herstellungsqualität der jeweiligen gewalzten Bänder überprüfen und sicherstellen zu können, ist es notwendig, von den jeweiligen Coils Proben zu entnehmen. Proben werden dabei typischer Weise vom auf der Mantelfläche des Coils liegenden Bandanfang genommen. Insbesondere wird ein Stück des Bandanfanges und/oder Bandendes abgetrennt, um eine Probe des auf dem Coil aufgewickelten Materials zu erhalten. Die Proben werden dann einer separaten Untersuchung zugeführt.

Vorteilhaft kann neben der eigentlichen Probenentnahme auf diese Weise auch eine Versäuberung des Bandanfanges und/oder Bandendes erreicht werden.

Die jeweiligen Coils werden mittels eines Bundes so zusammengehalten, dass sie beim Transport, nachdem sie die entsprechende Wickelvorrichtung bzw. Haspel verlassen haben, nicht aufspringen, sondern ihre ursprünglich gewickelte Form beibehalten. Ein solcher Bund ist üblicher Weise in Form eines Stahlbandes oder eines gebogenen Flachstahls ausgebildet, um den beim Transport wirkenden Kräfte entgegnen zu können.

Um nun eine Probenentnahme an einem solchen gebundenen Coil durchführen zu können, muss das Bundbindematerial aufgetrennt werden, der Bandanfang vom Coil abgewickelt werden, ein Stück des abgewickelten Bandanfanges als Probe abgetrennt werden, der Bandanfang wieder auf das Coil zurückgewickelt werden und dann ein neuer Bund um das Coil herum angebracht werden, um das Aufspringen des Coils beim weiteren erneuten Transport zu verhindern.

Um dieses erneute Binden des Coils bewerkstelligen zu können, werden die Coils entweder aufwändig von Hand gebunden, oder aber sie werden nach der Probenentnahme zu einer separaten Bindestation transportiert.

Beim Abwickeln des Coils wird der Bandanfang zumindest bei entsprechenden Materialien und Materialdicken plastisch verformt, um eine vorteilhafte Abtrennposition des Bandanfanges zu erhalten. Beim nachfolgenden Wiederaufwickeln des Bandanfanges wird das Band wiederum plastisch in die Spulenform gebogen.

Bezüglich der Probenentnahme schlägt die EP 1 888 284 B1 eine Vorrichtung und ein Verfahren zum Schopfen der Enden oder zum Abtrennen von Probestücken von zu Bunden gewickeltem Walzband vor, welche eine Schere, eine erste und eine zweite Bodenrolle und zumindest eine lageeinstellbare Andrückrolle aufweist.

Aus der DE 10 2007 017 383 A1 ist eine Einrichtung zum Binden eines Coils bekannt, bei welcher sich das Coil auf einem drehangetriebenen Dorn befindet, und eine Biegestation vorgesehen ist, die dem Coil ein vorgebogenes Flachstahlband in entsprechend dem Coilumfang vorkonfektionierter Länge zuführt. Dieses Flachstahlband ist mittels wenigstens einer Andrückrolle um das Coil herum führbar und die Enden des Flachstahlbandes sind miteinander verbindbar sind.

Weiterhin ist es aus dem Stand der Technik bekannt, zur Probenentnahme den Bandanfang vom Coil fort zu biegen, und diesen Bandanfang derart abzulenken, dass er zu einer jeweiligen Schneidevorrichtung geführt wird. Eine solche Vorrichtung ist beispielsweise aus der WO 2009/047395 A1 bekannt.

Der auf diese Weise plastisch verformte Bandanfang muss nachfolgend wieder auf das Coil aufgeformt werden.

Aus der EP 1 888 284 B1 ist eine Vorrichtung und ein Verfahren zur Probenentnahme von zu Bunden gewickeltem Walzband bekannt.

Aus der JP 08 267134 A ist eine Vorrichtung zum Abwickeln und Aufwickeln von Bunden von Stahlblechen bekannt.

### Beschreibung der Offenbarung

Entsprechend ist es eine Aufgabe der vorliegenden Erfindung, eine Vorrichtung sowie ein Verfahren zur effizienten Probenentnahme bei einem Coil, insbesondere bei einem Metallbandcoil, bereitzustellen.

Die Aufgabe wird gelöst durch eine Vorrichtung mit den Merkmalen des Anspruchs 1. Vorteilhafte Ausgestaltungen sind in den Unteransprüchen angegeben.

Entsprechend umfasst die Vorrichtung zur Entnahme einer Probe von einem Coil mindestens eine Bodenrolleneinheit zur Lagerung des Coils während der Probenentnahme, mindestens eine an die Mantelfläche des Coils andrückbare Andrückrolleneinheit, sowie mindestens eine Bundbindevorrichtung zum Binden des auf der mindestens einen Bodenrolleneinheit gelagerten Coils.

Mittels der Andrückrolleneinheit kann erreicht werden, dass das Coil bei der Probenentnahme und beim nachfolgenden Binden nicht aufspringt. Auf diese Weise wird die Sicherheit für die beteiligten Personen erhöht und die Verkaufsqualität des Coils wird verbessert. Das durch die Andrückrolleneinheit gehaltene und entsprechend auch nach der Probenentnahme nicht aufgesprungene Coil kann dann mittels der Bundbindeeinheit nach der Probenentnahme direkt wieder mit einem Bund versehen werden. Entsprechend kann auf ein aufwändiges manuelles Neubinden oder das Umsetzen in eine separate Bindestation verzichtet werden und das Coil ist sofort nach der Probenentnahme und dem Binden wieder verkaufsfertig.

Mit anderen Worten kann durch die angegebene Vorrichtung eine effiziente Probenentnahme und eine darauf folgend gute Produktqualität erreicht werden, da das Öffnen des Coils, also das Entfernen des Bundes, die Probenentnahme sowie das darauf folgende Wiederverschließen des Coils innerhalb einer einzigen Vorrichtung durchgeführt werden kann. Ein Aufspringen des Coils bei der Probenentnahme kann durch die Andrückrolleneinheit verhindert werden, so dass die Wicklungsqualität des Coils durch die Probenentnahme auch nicht beeinträchtigt wird.

Um ein effizientes Binden des Coils nach der Probenentnahme erreichen zu können weisen die Rollen der Bodenrolleneinheit und/oder die Rollen der Andrückrolleneinheit Ausnehmungen zum Hindurchführen von Bundbindematerial und/oder zur Ausbildung eines Bundbindekanals auf.

In einer Alternative oder ergänzend zu den genannten Ausnehmungen weisen die Rollen der Bodenrolleneinheit und/oder die Rollen der Andrückrolleneinheit bevorzugt jeweils mindestens zwei Rolleneinheiten auf, so dass zwischen den einzelnen Rollenelementen ein Bundbindematerial hindurchführbar ist und/oder ein Bundbindekanal ausgebildet ist.

Eine noch sicherere Handhabung des Coils wird erreicht durch das Vorsehen mindestens einer zweiten Andrückrolleneinheit, welche an die Mantelfläche des Coils andrückbar ist. Bevorzugt ist auch mindestens eine stationäre Bodenrolleneinheit und mindestens eine verfahrbare Bodenrolleneinheit vorgesehen, um die Vorrichtung auf unterschiedliche Coildurchmesser anzupassen. Bevorzugt sind die jeweiligen Bodenrolleneinheiten und die jeweiligen Andrückeinheiten um ca. 90° versetzt zueinander angeordnet, um das Coil aus allen Richtungen sicher zu umschließen.

Zur Probenentnahme ist vorteilhaft auch eine Probenentnahmevorrichtung zur Entnahme einer Probe vom Bandanfang des Coils vorgesehen.

Bevorzugt ist mindestens eine Ablenkvorrichtung zum Ablenken des Bandanfangs des Coils von der darunter liegenden Lage vorgesehen, wobei die Ablenkvorrichtung so ausgebildet ist, dass der Bandanfang des Coils nur elastisch von der darunter liegenden Lage ablenkbar ist. Auf diese Weise kann erreicht werden, dass eine plastische Verformung bei der Probenentnahme, welche auch eine erneute plastische Verformung beim Wiederaufwickeln des Bandanfanges auf das Coil notwendig macht, vermieden werden.

Hierunter wird insbesondere auch verstanden, dass eine plastische Verformung des vom Coil abgewickelten Metallbandes nicht stattfinden soll. Hierdurch wird erreicht, dass sich der Bandanfang nach der Probenentnahme wieder vollständig an die darunter liegende Lage des Coils anlegt, ohne dass hier weitere Verformungsschritte notwendig wären. Hierdurch wird zum einen die Bandqualität nicht beeinträchtigt und zum anderen kann die Probenentnahme und vor allem der nachfolgende Bindevorgang deutlich vereinfacht werden.

Bevorzugt umfasst die Ablenkvorrichtung ein Ablenkelement, welches eine Geometrie, Ausrichtung und/oder Anstellung so aufweist, dass der Bandanfang des Coils mit einer Kraft von der darunter liegenden Lage so ablenkbar ist, dass lediglich eine elastische Verformung des Bandanfanges stattfindet. Dabei ist das Ablenkelement vorteilhaft in Form eines Keils, bevorzugt mit einem spitzen Winkel, ausgebildet.

Um die entsprechende elastische Ablenkung zu erreichten ist die Ablenkvorrichtung der Mantelfläche des Coils bevorzugt im Wesentlichen tangential zuführbar.

Zur Probenentnahme kann eine Trennvorrichtung zum Abtrennen der Probe vom Coil vorgesehen sein und die Trennvorrichtung wirkt bevorzugt im Wesentlichen senkrecht zu der darunter liegenden Lage des Coils auf den Bandanfang. Auf diese Weise kann eine plastische Verformung des Bandes zur Probenentnahme vermieden werden. Insbesondere umfasst die Ablenkvorrichtung bevorzugt eine Schere, einen Amboss oder eine Schnittschiene, auf der die eigentliche Abtrennung der Probe durchgeführt werden kann, ohne dass die darunter liegende Lage des Coils beschädigt wird.

Um eine effiziente Bearbeitung des Coils zu ermöglichen, ist bevorzugt eine Bundbindevorrichtung zum Binden des Coils vorgesehen, so dass das Coil nach dem Wiederaufwickeln des Bandanfangs zum nachfolgenden Binden nicht umgesetzt werden muss.

Direkt oder indirekt messende Sensoren, beispielsweise in Form eines Sensors zur Verfolgung der vorderen Bandkante oder in Form eines Sensors zur Nachverfolgung das Coilrotation relativ zur Position der Ablenkvorrichtung sind bevorzugt vorgesehen, um eine definierte Probenentnahme und die gewünschte geringe Ablenkung des Bandanfanges von der darunter liegenden Lage des Coils zu steuern und zu überwachen.

Die oben gestellte Aufgabe wird weiterhin durch ein Verfahren nach Anspruch 13 gelöst.

Entsprechend umfasst das Verfahren zur Entnahme einer Probe von einem Coil die Schritte: Lagern des Coils auf mindestens einer Bodenrolleneinheit, Andrücken mindestens einer Andrückrolleneinheit an die Mantelfläche des Coils, Entnahme einer Probe, Binden des auf der mindestens einen Bodenrolleneinheit gelagerten Coils mittels einer Bundbindevorrichtung.

Das Verfahren umfasst in Ergänzung weiterhin die Schritte: Ablenken des Bandanfanges des Coils von der darunter liegenden Lage derart, dass nur eine elastische Verformung des Bandanfangs stattfindet, Entnehmen einer Probe von dem elastisch abgelenkten Bandanfang des Coils, sowie Anlegen des Bandanfanges an die darunter liegende Lage.

Die maximal aufzuwendende Kraft zum Aufbringen nur einer elastischen Verformung wird berechnet, auf Grundlage von Versuchen ermittelt und/oder auf Grundlage von Erfahrungswerten bestimmt.

### Kurze Beschreibung der Figuren

Bevorzugte weitere Ausführungsformen und Aspekte der vorliegenden Offenbarung werden durch die nachfolgende Beschreibung der Figuren näher erläutert werden. Dabei zeigen:
- Figur 1: eine schematische Seitenansicht einer Vorrichtung zur Probenentnahme bei einem Coil gemäß der vorliegenden Offenbarung;
- Figur 2: die Vorrichtung gemäß Figur 1 in einem zweiten Betriebszustand;
- Figur 3: schematisch die Ablenkung des Bandanfanges von einem Coil mit bleibender plastischer Verformung;
- Figur 4: schematisch die zurückbleibende plastische Verformung nach Anlegen des neuen Bandanfanges auf das Coil;
- Figur 5: das Auslenken des Bandanfanges mit lediglich elastischer Verformung;
- Figur 6: schematisch das Zurücklegen des neuen Bandanfanges nach nur elastischer Verformung; und
- Figur 7: schematisch eine weitere Vorrichtung zur Probenentnahme.

### Ausführliche Beschreibung der bevorzugten Ausführungsbeispiele

Im Folgenden werden bevorzugte Ausführungsbeispiele anhand der Figuren beschrieben werden. Hierbei werden gleiche oder ähnliche Elemente mit den identischen Bezugszeichen bezeichnet und eine wiederholte Beschreibung dieser Elemente wird teilweise fortgelassen, um Redundanzen zu vermeiden.

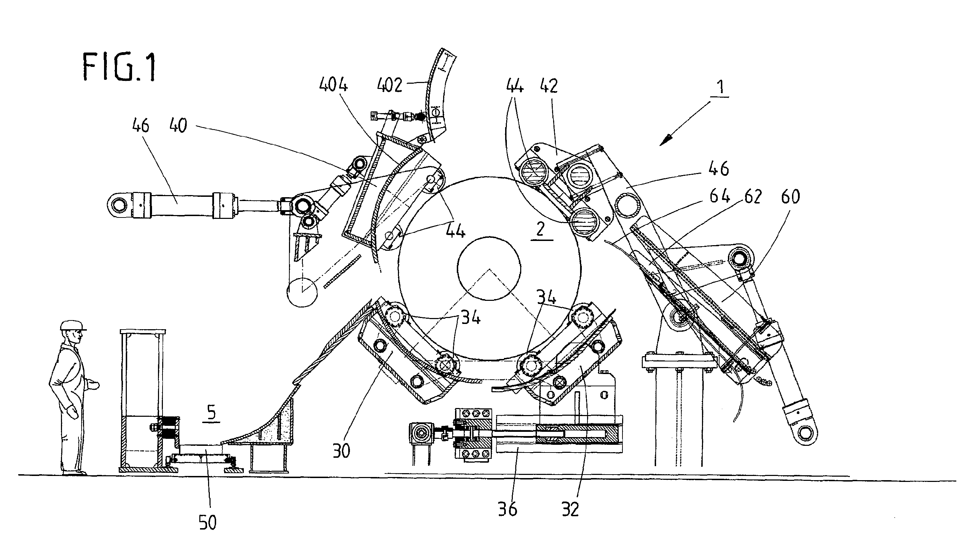

Figur 1 zeigt eine Vorrichtung 1 zur Entnahme von Proben eines Coils 2, insbesondere eines Metallbandcoils. Zur Entnahme von Proben von einem Coil ist es notwendig, die ursprüngliche Bindung des Coils zu lösen, so dass der Bandanfang des Coils vom Coil abgezogen werden kann um dann einen Teil des Bandanfanges als Probe abzutrennen. Nach der Abtrennung der Probe vom Bandanfang muss der dann neue Bandanfang wiederum an das Coil angelegt werden - also wieder aufgewickelt werden -und das Coil muss erneut gebunden werden.

Figur 1 zeigt ein Coil 2, welches auf zwei Bodenrolleneinheiten 30, 32 gelagert ist. Die Bodenrolleneinheiten umfassen jeweils Rollen 34, welche in direktem Kontakt mit der jeweils äußersten Windung des Coils 2 - also der Mantelfläche des Coils 2 - stehen und auf welchen das Coil 2 drehbar um seine Wickelachse herum gelagert ist.

Die eine Bodenrolleneinheit 30 ist stationär ausgebildet und die zweite Bodenrolleneinheit 32 ist mittels einer Verfahrvorrichtung 36 verstellbar, um Coils mit unterschiedlichen Durchmessern problemlos aufnehmen zu können. Durch die verfahrbare Bodenrolleneinheit 32 können daher die geometrischen Verhältnisse innerhalb der Vorrichtung 1 entsprechend dem jeweiligen Durchmesser des Coils 2 weitgehend identisch gestaltet werden.

Eine erste Andrückrolleneinheit 40 und eine zweite Andrückrolleneinheit 42 sind vorgesehen, welche gegenüber den Bodenrolleneinheiten 30, 32 in etwa um 90° bezüglich des Coils 2 verschoben angeordnet sind. Die Andrückrolleneinheiten weisen ebenfalls jeweils zwei Rollen 44 auf, welche jeweils in direktem Kontakt mit der äußersten Windung des Coils 2 stehen. Die Andrückrolleneinheiten 40, 42 können mittels jeweiliger Verfahrvorrichtungen 46, die beispielsweise durch Hydraulikzylinder ausgebildet sein können, an die jeweilige äußere Windung des Coils 2 angelegt werden, jeweils abhängig vom Durchmesser des Coils 2, und können auch vollständig vom Coil abgehoben werden, um ein einfaches Einbringen und Herausheben des Coils nach oben heraus zu ermöglichen.

Die Andrückrolleneinheiten 40, 42 dienen dazu, die Windungen des Coils zu halten bzw. zu fixieren, wenn die Bindung des Coils 2 gelöst wird, um eine Probe entnehmen zu können. Auf diese Weise kann verhindert werden, dass das Coil 2 aufspringt, und sich die Windungen lockern können.

Die Bodenrolleneinheiten 30, 32 sowie die Andrückrolleneinheiten 40, 42 sind bevorzugt in gleichmäßigen Abständen bzw. gleichmäßigen Drehwinkeln um das Coil 2 herum angeordnet, um ein gleichmäßiges Andrücken der einzelnen Coilwindungen und insbesondere der äußersten Windung des Coils beim Abziehen des Bandanfanges zur Probenentnahme zu bewerkstelligen.

Zur eigentlichen Probenentnahme wird der Bandanfang vom Coil 2 in Richtung der Probenentnahmestation 5 abgezogen, dort mittels einer in Figur 1 nicht gezeigten Abtrennvorrichtung abgetrennt, wobei die abgetrennte Probe dann über eine Probenabführvorrichtung 50 einer entsprechenden Analysestation zugeführt wird.

Nachdem die Probe entnommen wurde, wird das Bandende wieder auf das Coil 2 zurückgeführt, beispielsweise dadurch, dass das Coil 2 entgegen der Abwickelrichtung gedreht wird, und das Coil wird dann wieder mittels einer Bundbindevorrichtung 60 gebunden. Die Bundbindevorrichtung 60 umfasst einen Schützen 62, aus welchem das Bundbindematerial 64, insbesondere ein flaches Stahlband, herausgeführt wird, und dann um das Coil 2 herumgeführt wird.

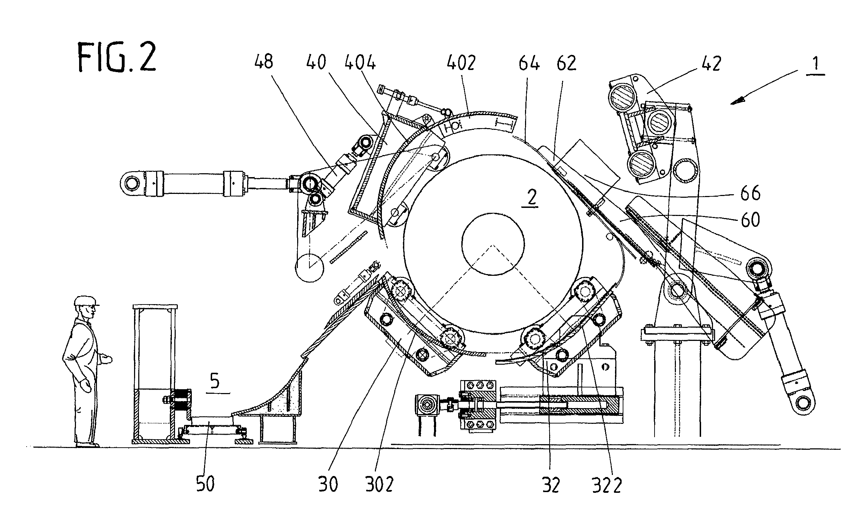

Diese Situation ist in Figur 2 gezeigt. Hier ist eine der Andrückrolleneinheiten 42 vom Coil 2 abgehoben und aus dem Weg geschwenkt. Die Bundbindevorrichtung 60 stellt am Schützen 62 das Bundbindematerial, also insbesondere das flache Stahlband, bereit. Dieses flache Stahlband wird über an der ersten Andrückrolleneinheit 40 vorgesehene Führungsvorrichtungen 402, 404 um das Coil herumgeführt. Weitere Führungsvorrichtungen sind an den Bodenrolleneinheiten 30, 32 in Form der Führungsvorrichtungen 302 bzw. 322 vorgesehen. Mit anderen Worten kann das Bundbindematerial 64 ausgehend von dem Schützen 62 einmal um das Coil herumgeführt werden, indem es in den jeweiligen Führungsvorrichtungen 402, 404, 302, 322 geführt wird und so wieder zu der Bundbindevorrichtung 60 zurückgeführt wird.

An einer Bundverbindungsvorrichtung 66 werden die beiden Enden des Bundbindematerials 64 dann miteinander fest verbunden, so dass das Coil 2 seine geschlossene Form auch dann beibehält, wenn die Andrückrolleneinheit 40 ebenfalls vom Coil 2 abgehoben wird.

Die Führungsvorrichtung 402 ist in der gezeigten Ausführungsform gegenüber dem zweiten Teil der Führungsvorrichtung 404, welche beide an der Andrückrolleneinheit 40 vorgesehen sind, verschwenkbar. Mit anderen Worten wird die Führungsvorrichtung 402 erst dann in den Führungsweg des Bundbindematerials 64 eingeschwenkt, wenn tatsächlich der Bund gebunden werden soll.

Ausgewählte Rollen 34 der Bodenrolleneinheiten 30, 32, sowie ausgewählte Rollen der Andrückrolleneinheiten 40, 42, nämlich der Rollen 44, sind bevorzugt angetrieben ausgebildet. Es können auch sämtliche Rollen 34, 44 angetrieben sein. Durch den Antrieb der Rollen 34, 44 wird zum einen ermöglicht, dass das Coil 2 auf den Bodenrolleneinheiten 30, 32 gedreht werden kann, um die eigentliche Probenentnahme zu ermöglichen. Der Antrieb dient zum anderen dazu, das Coil 2 nach der Probenentnahme wieder in eine verschließbare Form zu bringen. Die Rollen treiben dabei das Coil an dessen Mantelfläche an.

Weiterhin ist es möglich, durch den Antrieb der jeweiligen Rollen 34, 44 einen gewissen Zug auf die äußerste Windung des Coils 2 derart auszuüben, dass auch die äußerste Windung straff an der jeweils darunter liegenden Lage des Coils anliegt.

Das Bundbindematerial 64 kann besonders einfach um das Coil 2 herumgeführt werden, wenn die jeweiligen Rollen 34, 44 entweder mit Ausnehmungen zur Durchführung des Bundbindematerials 64 versehen sind, oder die Rollen 34, 44 geteilt durch nebeneinander liegende Rollenelemente ausgeführt werden.

In der in Figur 2 gezeigten Abbildung ist eine schematische Schnittansicht derart gezeigt, dass die Führungsvorrichtungen 402, 404, 302, 322 zwischen den jeweiligen Rollenelementen der Rollen 34, 44 angeordnet sind. Entsprechend kann das Binden der Bunde in der Vorrichtung 1 direkt nach der Probenentnahme und direkt nach dem Rückaufwickeln des Bandanfanges durchgeführt werden, ohne dass die jeweiligen Rollen 34, 44 beim erneuten Binden des Coils im Wege wären.

Die Bundbindevorrichtung 60 kann auf das Coil bzw. nahe dem Coil 2 eingeschwenkt werden, nachdem die zweite Andrückrolleneinheit 42 vom Coil abgehoben wurde und in eine Parkposition verschwenkt wurde.

In einer alternativen Ausführungsform ist es jedoch auch denkbar, die Bundbindevorrichtung 60 mit der zweiten Andrückrolleneinheit 42 zu integrieren, so dass auch auf den Verschwenkschritt verzichtet werden kann, wodurch die Effizienz der Probenentnahme noch weiter gesteigert werden könnte.

Aus Figur 2 ist weiterhin deutlich ersichtlich, dass das Coil 2 beim Binden zumindest über die Bodenrolleneinheiten 30, 32, sowie die Andrückrolleneinheit 40 gehalten wird, und insbesondere die äußerste Windung, sowie der Bandanfang, an welchem die Probeentnahme stattgefunden hat, mittels der Andrückrolleneinheit 40 sicher und fest gehalten ist. Auf diese Weise wird sichergestellt, dass die äußersten Windungen und insbesondere die Außenwindung des Coils dicht an der darunter liegenden Lage anliegen, die Verkaufsqualität der dann neu gebundenen Coils entsprechend besser ist, und das Binden das Coils direkt nach der Probenentnahme in der gleichen Station stattfinden kann, ohne ein Umsetzen des Coils 2 erforderlich zu machen, mit den damit verbundenen Unfallgefahren.

Durch die Führungsvorrichtungen 402, 404, 302, 322 wird, nach dem Einschwenken der Bundbindevorrichtung 60 nach dem Abschwenken der zweiten Andrückrolleneinheit 42 ein vollständiger Bindebandkanal bzw. Kanal zur Führung des Bundbindematerials 64 ausgebildet, so dass das Bundbindematerial 64 vollständig um das Coil herumgeführt werden kann und entsprechend das Coil gebunden werden kann.

Die Möglichkeit der Positionierung der verfahrbaren Bodenrolleneinheit 32 durch die Verfahrvorrichtung 36 ermöglicht eine bessere Positionierbarkeit des Coils 2 von Coils mit unterschiedlichen Durchmessern bezüglich des jeweiligen Bandanfanges, an dem die Probe des Coils entnommen werden soll.

Die Andrückrolleneinheit 40 ist weiterhin mittels einer Verstellvorrichtung 48 verschwenkbar, um den Bandanfang entsprechend zur Probenentnahme führen zu können, und den Bandanfang nach der Probenentnahme wieder zurück an das Coil 2 pressen zu können. Die Verschwenkung der Andrückrolleneinheit 40 ist dabei um einen Lagerpunkt derart möglich, dass die beiden Rollen 44 entweder so angeordnet sein können, dass sie der eigentlichen Mantelfläche des Coils 2 folgen, also mit den anderen Rollen 44, 34 der beiden Bodenrolleneinheiten 30, 32 sowie der zweiten Andrückrolleneinheit 42 im Wesentlichen auf einer Kreisbahn liegen, oder aber eine der beiden gezeigten Rollen 44 der Andrückrolleneinheit 40 kann von dieser gedachten Kreisbahn abweichen und entsprechend ausgelenkt werden, so dass das Bandende, von welchem die Probe genommen werden soll, durch die dann abgeschwenkte Rolle 44 geführt wird. Beim Wiederaufwickeln des Coils nach der Probenentnahme dient die dann abgeschwenkte Rolle 44 dazu, das Bandende wieder an das Coil 2 bzw. an die darunter liegende dann äußerste Windung heranzuführen. Dies kann durch ein Heranschwenken der Rolle 44 wieder auf die gedachte Kreislinie bewerkstelligt werden.

Die Lage des Bandendes kann die ganze Zeit während des Durchführens der Probenentnahme mittels direkter oder indirekter Sensoren überwacht werden. Unter direkten Sensoren werden Sensoren verstanden, welche tatsächlich das Bandende selbst messen, beispielsweise durch bildgebende Verfahren, wie beispielsweise eine Kamera, durch Abtasten mittels Lichtschranken oder ähnliche geeignete Sensorverfahren. Eine indirekte Beobachtung des Bandanfanges kann erreicht werden durch Messung der jeweiligen Umdrehungen des Coils 2 bzw. durch Messung der Umdrehung der jeweiligen Rollen 34, 44, welche die Mantelfläche des Coils 2 direkt kontaktieren.

Die Vorrichtung sowie das Verfahren, welches hier zur Probenentnahme beschrieben ist, eignet sich insbesondere zur Probenentnahme bei Dickbandcoils mit hoher Zugfestigkeit. Gerade bei Coils aus hochfesten Bändern neigen diese dazu, beim Öffnen aufzuspringen, was eine hohe Verletzungsgefahr in sich birgt sowie das nachfolgende erneute Aufwickeln des Coils ohne Zwischenräume erschwert. Wenn das Coil 2 jedoch auf den beiden Bodenrolleneinheiten 30, 32 geführt ist und die beiden Andrückrolleneinheiten 40, 42 um das Coil 2 herum angedrückt sind, kann das Coil nach dem Öffnen der Bindung bzw. das Coilsicherung nicht aufspringen, so dass das Coil 2 gefahrlos abgewickelt werden kann.

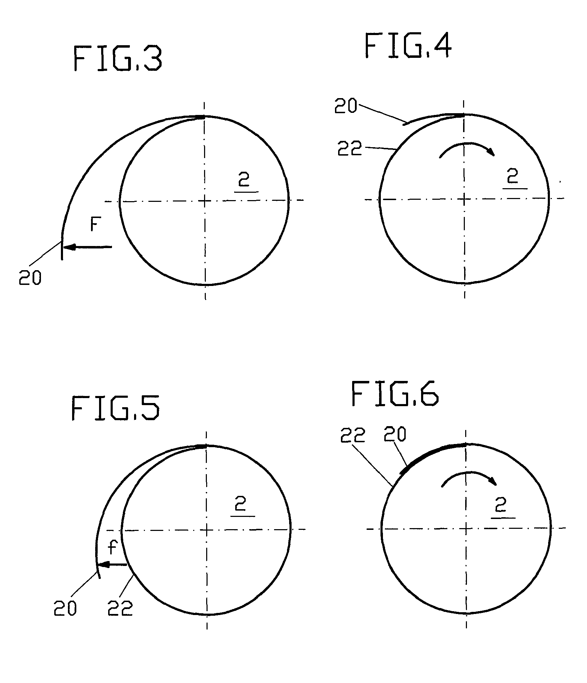

In den Figuren 3 und 4 ist schematisch das Verhalten des Bandendes 20 eines Coils 2 gezeigt, welches zur Entnahme einer Probe mit einer Kraft F ausgelenkt wird, welche eine bleibende plastische Verformung im Material des Coils hervorruft. In Figur 3 ist dabei schematisch die Situation gezeigt, in der der Bandanfang 20 mit einer Kraft F ausgelenkt wird, um die Probenentnahme zu ermöglichen. Figur 4 zeigt den Zustand, in dem der Bandanfang 20 wieder auf das Coil 2 aufgewickelt wurde. Durch die zurückbleibende plastische Verformung des Bandanfanges 20 liegt der Bandanfang 20 nicht direkt und vollständig auf der darunter liegenden Lage 22 an.

Dieses Verfahren ist jedoch das bislang angewendete Verfahren, nämlich den Bandanfang 20 unter Aufbringung einer entsprechenden Kraft so umzulenken, dass er in eine Probenentnahmestelle zum Abtrennen der Probe geführt wird.

Ausgehend hiervon ist es auch Gegenstand der vorliegenden Offenbarung, die in den Figuren 5 und 6 gezeigte Vorgehensweise zum Abtrennen einer Probe von einem Coil 2 durchzuführen. Hierzu wird, wie in Figur 5 gezeigt, lediglich eine Kraft f aufgewendet, um den Bandanfang 20 von der darunter liegenden Lage 22 des Coils 2 abzulenken, derart, dass es nur eine elastische Verformung des Materials gibt, aber keine bleibende plastische Verformung. Entsprechend ergibt sich beim Zurückdrehen des dann neuen Bandanfanges 20 auf die darunter liegende Lage 22 des Coils 2 nach der Probenentnahme das in Figur 6 gezeigte Bild, nämlich federt das Material und insbesondere der Bandanfang 20 wieder derart zurück, dass der Bandanfang 20 an der unteren Lage 22 des Coils 2 direkt vollständig anliegt. Entsprechend wird keine plastische Verformung in den Bandanfang 20 eingebracht, so dass auch die Materialqualität bei dem in den Figuren 5 und 6 gezeigten Verfahren aufrechterhalten bleiben kann.

Die Kraft f, welche lediglich zu einer elastischen Verformung des Bandanfanges 20, nicht jedoch zu einer bleibenden plastischen Verformung führt, kann entweder berechnet werden, auf Erfahrungswerten basieren oder aber experimentell für das jeweilige Material sowie die Bandstärke ermittelt werden.

Das Abtrennen von Material von dem Coil 2 kann neben der Probenentnahme auch dazu führen, dem Bandanfang 20 nach der Herstellung des Coils eine andere Kontur zu geben, beispielweise eine scharfe Trennkante.

Bislang sind, zur Durchführung des Verfahrens welches in den Figuren 3 und 4 gezeigt ist, zum Abtrennen von Material von einem gewickelten Coil verschiedene Trennverfahren bekannt, beispielsweise mechanisches oder thermisches Schneiden. Dabei muss für den eigentlichen Einsatz der Trennvorrichtung der Bandanfang 20 unter plastischer Verformung vom Coil abgelenkt werden, um den beim mechanischen Schneidverfahren notwendigen zusätzlichen Platz zwischen Coil und abgelenktem Bandanfang bereitzustellen oder aber bei brennenden Schneidverfahren den notwendigen Abstand bereitzustellen, welcher zum Schutz der äußeren Windung des Coils gegen Beschädigungen benötigt wird.

Bei spanendem Abtrennen von Material braucht das Material prinzipiell überhaupt nicht abgehoben zu werden, es ergeben sich jedoch Probleme dahingehend, dass bei einem spanenden Verfahren das Material entweder nicht ganz abgetrennt wird und dann entsprechend nachfolgend abgerissen werden muss, wodurch störende Grate entstehen oder aber bei einem vollständigen Abtrennen besteht die wesentliche Gefahr, die darunter liegende Coilwindung oder zumindest deren Oberfläche zu beschädigen.

Das Abstehen des Bandanfanges 20 von der darunter liegenden Windung 22, so wie es in Figur 4 gezeigt ist, ist daher nicht gewünscht, da dieser Bandanfang 20 nur mit zusätzlichem Aufwand wieder an das Coil 2 bzw. die darunter liegende Windung 22 angelegt werden kann. Ein abstehender Bandanfang 20 birgt außerdem Nachteile bei der nachfolgenden Bearbeitung in sich, sowie beispielsweise beim Drehen des Coils auf einer Unterlage, beim nachfolgenden Binden des Coils mit Bindematerial sowie beim weiteren Transport des Coils.

Darüber hinaus birgt der abstehende Bandanfang 20 ein Gefährdungspotenzial in sich, da durch die abstehenden Teile eine Verletzungsgefahr für Personen besteht.

Entsprechend ist das in den Figuren 5 und 6 gezeigte Verfahren, nämlich den Bandanfang 20 nur mit einer so geringen Kraft f abzulenken, dass lediglich eine elastische Verformung stattfindet, nicht jedoch eine plastische Verformung, ein Beitrag dahingehend, dass die Materialqualität des Coils verbessert wird und die Schwierigkeiten beim Handling verringert werden.

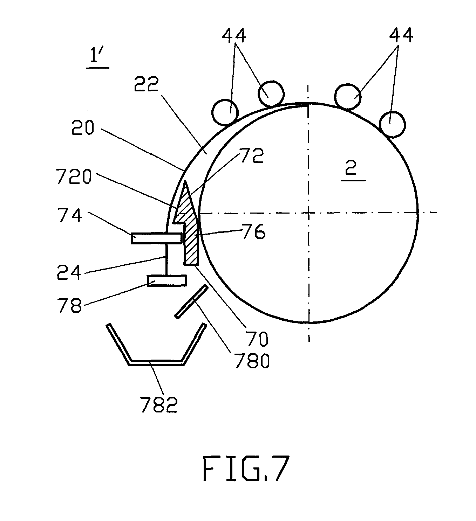

In Figur 7 ist schematisch eine Vorrichtung zur Entnahme einer Probe von einem Coil 2 gezeigt. Hierzu sind wiederum Andrückrollen 44 schematisch angedeutet, welche dazu dienen, ein Aufspringen des Coils nach dem Lösen der Bundbindung zu verhindern. Das Coil 2 befindet sich typischerweise auf Bodenrolleneinheiten, die in Figur 7 jedoch nicht gezeigt sind.

Der Bandanfang 20 wird vom Coil 2 dadurch abgezogen, dass das Coil entsprechend translatorisch und/oder rotatorisch bewegt wird, so dass der Bandanfang 20 vom Coil fortbewegt wird. Diese Fortbewegung wird unterstützt durch eine Ablenkvorrichtung 70, welche ein keilförmiges Ablenkelement 72 umfasst. Das keilförmige Ablenkelement 72 ist dabei so positioniert, ausgerichtet und geometrisch gestaltet, dass die Kraft, welche das Ablenkelement 72 auf den Bandanfang 20 ausübt, so gering ist, dass eine bleibende plastische Verformung am Bandanfang 20 nicht erreicht wird, sondern lediglich eine elastische Ablenkung stattfindet. Die Ablenkvorrichtung 70 ist in der in Figur 7 gezeigten Ausführungsform im Wesentlichen keilförmig mit einem spitzen Winkel ausgebildet. Andere geometrische Ausgestaltungen sind jedoch ebenso denkbar so lange sie lediglich eine elastische Verformung ermöglichen.

Das Ablenkelement 72 ist dabei im Wesentlichen tangential zu der Mantelfläche des Coils 2 geführt, so dass ein einfaches Abheben des Bandendes 20 von der darunter liegenden Lage 22 des Coils 2 erreicht wird.

Die jeweiligen Leitflächen 720 des Ablenkelements 72 sind so geformt, dass der Bandanfang 20 von der darunter liegenden Lage 22 abgehoben wird, der resultierende Winkel sowie die ausgeübte Kraft jedoch nicht zu einer bleibenden plastischen Verformung führt.

Um nun eine Probe von dem Bandanfang 20 abtrennen zu können, oder lediglich den Bandanfang zu bereinigen, ist eine Trennvorrichtung 74 vorgesehen, welche in Form eines Schneidemessers dargestellt ist, welches gegen eine Ambossfläche 76 der Ablenkvorrichtung 70 arbeitet. Die Trennvorrichtung wirkt in einer Richtung auf den Bandanfang 20, die im Wesentlichen senkrecht zu der darunter liegenden Lage 22 des Coils gerichtet ist.

Die Ambossfläche 76 der Ablenkvorrichtung 70 kann jedoch auch einfach als Schutzfläche, als Führung oder als andere Vorrichtung ausgebildet sein, welche ein Abtrennung der Probe 24 von dem Bandanfang 20 durch thermisches oder mechanisches Schneiden oder durch ein spanendes Verfahren ermöglicht.

Ein Anschlag 78 ist vorgesehen, an welchem der Bandanfang 20 anschlägt, bevor die Trennvorrichtung 74 die Probe 24 abtrennt.

Ein Materialleitsystem 780 sowie ein Materialsammelsystem 782 sind ebenfalls vorgesehen, um die abgetrennte Probe 24 entsprechend leiten und sammeln zu können, um sie dann der nachfolgenden Analyse zuführen zu können.

Die maximal zulässige elastische Materialverformung und die daraus resultierende Geometrie der Ablenkvorrichtung 70 kann bereits im Vorhinein ermittelt werden, beispielsweise durch eine Vorausberechnung, praktische Versuche oder aufgrund von Erfahrungswerten.

Die Relativbewegung des Coils 2 zu der Ablenkvorrichtung 70 kann dadurch erzeugt werden, dass entweder das Coil 2 auf einer Auflage, wie beispielsweise Bodenrollen, gedreht werden, ober aber die Ablenkvorrichtung 70 relativ zum feststehenden Coil 2 bewegt wird.

Die Geometrie des Ablenkelementes 72 bzw. dessen Ausrichtung oder Anstellung gegenüber dem Coil stellt sicher, dass die aufgebrachte Ablenkungskraft lediglich eine elastische Kraft ist.

Das Abwickeln des Materialfanges kann mittels direkt oder indirekt messender Sensoren den Bandanfang 20 verfolgen und entsprechend die Verformung des Bandanfanges 20 so berechnen, dass lediglich eine elastische Verformung stattfindet.

Der Anschlag 78 kann verstellbar relativ zu der Trennvorrichtung 74 vorgesehen sein, um unterschiedliche Dimensionen der abgetrennten Proben bzw. Bandanfänge zu ermöglichen.

Durch die Verfolgung des Bandanfanges 20 in Kombination mit einem geeigneten Berechnungsverfahren kann eine Abweichung von den voraus berechneten bzw. voraus bestimmten Verformungswerten erkannt werden und diese Abweichung kann dazu genutzt werden, die Relativbewegung zwischen dem Coil 2 und der Ablenkvorrichtung 70 sowie dem Anschlag 78 zu beeinflussen.

Die Schneidevorrichtung 74 kann so ausgebildet werden, dass sie sich an unterschiedliche Materialparameter des jeweiligen Coils 2 anpassen kann, beispielsweise an die Dicke des Bandes, an die Breite des Bandes, an dessen Materialzusammensetzung sowie dessen Ebenheit.

Neben der Ambossfläche 76 können in der Ablenkvorrichtung 70 weitere Schutzvorrichtungen vorgesehen sein, beispielsweise Abschirmbleche oder ähnliches, um die untere Lage 22 des Coils beim Abtrennen der Probe zu schützen.

### Bezugszeichenliste

- 1, 1': Vorrichtung zur Probenentnahme
- 2: Coil
- 20: Bandanfang
- 30: stationäre Bodenrolleneinheit
- 32: verfahrbare Bodenrolleneinheit
- 34: Rollen der Bodenrolleneinheiten
- 36: Verfahrvorrichtung
- 302: Führungsvorrichtung für Bundbindematerial
- 322: Führungsvorrichtung für Bundbindematerial
- 40: erste Andrückrolleneinheit
- 42: zweite Andrückrolleneinheit
- 44: Rollen der Andrückrolleneinheiten
- 46: Verfahrvorrichtung
- 48: Verstellvorrichtung
- 402: klappbare Führungsvorrichtung für Bundbindematerial
- 404: Führungsvorrichtung für Bundbindematerial
- 5: Probenentnahmestation
- 50: Probenabführvorrichtung
- 60: Bundbindevorrichtung
- 62: Schütz
- 64: Bundbindematerial
- 66: Bundbindevorrichtung
- 70: Ablenkvorrichtung
- 72: Ablenkelement
- 74: Trennvorrichtung
- 76: Ambossfläche
- 78: Anschlag
- 720: Leitfläche
- 780: Materialleitsystem
- 782: Materialsammelsystem

## Patentansprüche

1. Vorrichtung (1) zur Entnahme einer Probe (24) von einem Coil (2), umfassend mindestens eine Bodenrolleneinheit (30, 32) zur Lagerung des Coils (2) während der Probenentnahme und mindestens eine an die Mantetfiäche des Coils (2) andrückbare Andrückrolleneinheit (40, 42), **dadurch gekennzeichnet, dass** die Vorrichtung weiterhin mindestens eine Bundbindevorrichtung (60) zum Binden des auf der mindestens einen Bodenrolleneinheit (30, 32) gelagerten Coils (2) umfasst.

2. Vorrichtung gemäß Anspruch 1, wobei die Rollen (34) der Bodenrolleneinheit (30, 32) und/oder die Rollen (44) der Andrückrolleneinheit (40, 42) Ausnehmungen zum Hindurchführen von Bundbindematerial (64) und/oder zur Ausbildung eines Bundbindekanals aufweisen.

3. Vorrichtung gemäß Anspruch 1 oder 2, wobei die Rollen (34) der Bodenrolleneinheit (30, 32) und/oder die Rollen (44) der Andrückrolleneinheit (40, 42) jeweils mindestens zwei Rolleneinheiten aufweisen, so dass zwischen den einzelnen Rollenelementen ein Bundbindematerial (64) hindurchführbar ist und/oder ein Bundblndekanal ausgebildet ist

4. Vorrichtung gemäß einem der vorstehenden Ansprüche, wobei mindestens eine zweite Andrückrolleneinheit (42) vorgesehen ist, welche an die Mantelfläche des Coils (2) andrückbar ist.

5. Vorrichtung gemäß einem der vorstehenden Ansprüche, wobei mindestens eine stationäre Bodenrolleneinheit (30) und mindestens eine verfahrbare Bodenrolleneinheit (32) vorgesehen sind.

6. Vorrichtung gemäß einem der vorstehenden Ansprüche, wobei eine Probenentnahmevorrichtung (5) zur Entnahme einer Probe (24) vom Bandanfang (20) des Coils (2) vorgesehen ist.

7. Vorrichtung gemäß einem der vorstehenden Ansprüche, wobei mindestens eine Ablenkvorrichtung (70) zum Ablenken des Bandanfangs (20) des Coils (2) von der darunter liegenden Lage (22) vorgesehen ist, wobei die Ablenkvorrichtung so ausgebildet ist, dass der Bandanfang (20) des Coils (2) nur elastisch von der darunter liegenden Lage (22) ablenkbar ist.

8. Vorrichtung gemäß Anspruch 7, wobei die Ablenkvorrichtung (70) ein Ablenkelement (72) umfasst, welches eine Geometrie, Ausrichtung und/oder Anstellung so aufweist, dass der Bandanfang (20) des Coils (2) mit einer Kraft (f) von der darunter liegenden Lage (22) so ablenkbar ist, dass lediglich eine elastische Verformung des Bandanfanges (20) stattfindet.

9. Vorrichtung gemäß Anspruch 8, wobei das Ablenkelement (72) in Form eines Keils, bevorzugt mit einem spitzen Winkel, ausgebildet ist.

10. Vorrichtung gemäß einem der Ansprüche 7 bis 9, wobei die Ablenkvorrichtung (70) der Mantelfläche des Coils (2) im Wesentlichen tangential zuführbar ist und bevorzugt ein Ablenkelement (72) der Mantelfläche des Coils (2) zuführbar ist.

11. Vorrichtung gemäß einem der Ansprüche 7 bis 10, wobei eine Trennvorrichtung (74) zum Abtrennen der Probe (24) vom Coil (2) vorgesehen ist, wobei die Trennvorrichtung bevorzugt im Wesentlichen senkrecht zu der darunter liegenden Lage des Coils auf den Bandanfang wirkt.

12. Vorrichtung gemäß einem der vorstehenden Ansprüche, wobei direkt oder indirekt messende Sensoren vorgesehen sind, um die Position sowie die Ausrichtung des Bandanfanges (20) zu bestimmen.

13. Verfahren zur Entnahme einer Probe (24) von einem Coil (2), umfassend die Schritte:
- Lagern des Coils (2) auf mindestens einer Bodenrolleneinheit (30, 32),
- Andrücken mindestens einer Andrückrolleneinheit (40, 42) an die Mantelfläche des Coils (2),
- Entnahme einer Probe,
- Binden des auf der mindestens einen Bodenrolleneinheit (30, 32) gelagerten Coils (2) mittels einer Bundbindevonichtung (60).

14. Verfahren gemäß Anspruch 13, umfassend die weiteren Schritte:
- Ablenken des Bandanfanges (20) des Coils (2) von der darunter liegenden Lage (22) derart, dass nur eine elastische Verformung des Bandanfangs (20) stattfindet,
- Entnehmen einer Probe (24) von dem elastisch abgelenkten Bandanfang (20) des Coils (2), sowie
- Anlegen des Bandanfanges (20) an die darunter liegende Lage (22).

15. Verfahren gemäß Anspruch 14, wobei die maximal aufzuwendende Kraft (f) zum Aufbringen nur einer elastischen Verformung berechnet wird, durch Versuche ermittelt wird und/oder auf Grundlage von Erfahrungswerten bestimmt wird.

## Claims

1. Device (1) for removing a sample (24) from a coil (2), comprising at least one floor roller unit (30, 32) for mounting the coil (2) during the sample removal and at least one presser roller unit (40, 42) pressable against the circumferential surface of the coil (2), **characterised in that** the device further comprises at least one coil binding device (60) for binding the coil mounted on the at least one floor roller unit (30, 32).

2. Device according to claim 1, wherein the rollers (34) of the floor roller unit (30, 32) and/or the rollers (44) of the presser roller unit (40, 42) have recesses for guidance through of coil binding material (64) and/or for forming a coil binding channel.

3. Device according to claim 1 or 2, wherein the rollers (34) of the floor roller unit (30, 32) and/or the rollers (44) of the presser roller unit (40, 42) each comprise at least two roller units so that a coil binding material (64) can be led through and/or a coil binding channel formed between the individual roller elements.

4. Device according to any one of the preceding claims, wherein at least one second presser roller unit (42) is provided, which can be pressed against the circumferential surface of the coil (2).

5. Device according to any one of the preceding claims, wherein at least one stationary floor roller unit (30) and at least one movable floor roller unit (32) are provided.

6. Device according to any one of the preceding claims, wherein a sample removal device (5) for removing a sample (24) from the strip start (20) of the coil (2) is provided.

7. Device according to any one of the preceding claims, wherein at least one deflecting device (70) for deflecting the strip start (20) of the coil (2) from the layer (22) lying thereunder is provided and wherein the deflecting device is so constructed that the strip start (20) of the coil (2) is deflectable only resiliently from the layer (22) lying thereunder.

8. Device according to claim 7, wherein the deflecting device (70) comprises a deflecting element (72), which has such a geometry, alignment and/or adjustment that the strip start (20) of the coil (2) is so deflectable by a force (f) from the layer (22) lying thereunder that merely a resilient deformation of the strip start (20) takes place.

9. Device according to claim 8, wherein the deflecting element (72) is constructed in the form of a wedge, preferably with an acute angle.

10. Device according to any one of claims 7 to 9, wherein the deflecting device (70) can be led substantially tangentially up to the circumferential surface of the coil (2) and preferably a deflecting element (72) can be led up to the circumferential surface of the coil (2).

11. Device according to any one of claims 7 to 10, wherein a separating device (74) for separating the sample (24) from the coil (2) is provided, wherein the separating device preferably acts on the strip start substantially perpendicularly to the layer of the coil lying thereunder.

12. Device according to any one of the preceding claims, wherein directly or indirectly measuring sensors are provided in order to determine the position as well as the alignment of the strip start (20).

13. Method of removing a sample (24) from a coil (2), comprising the steps of:
- mounting the coil (2) on at least one floor roller unit (30, 32),
- pressing at least one presser roller unit (40, 42) against the circumferential surface of the coil (2),
- removing a sample, and
- binding the coil (2), which is mounted on the at least one floor roller unit (30, 32), by means of a coil binding device (60).

14. Method according to claim 13, comprising the further steps of:
- deflecting the coil start (20) of the coil (2) from the layer (22) lying thereunder in such a manner that only a resilient deformation of the strip start (20) takes place,
- removing a sample (24) from the resiliently deflected strip start (20) of the coil (2) and
- laying the strip start (20) against the layer (22) lying thereunder.

15. Method according to claim 14, wherein the maximum force (f), which is to be exerted, for bringing about only a resilient deformation is calculated and/or is ascertained by experiment and/or is determined on the basis of empirical values.

## Revendications

1. Dispositif (1) pour le prélèvement d'un échantillon (24) à partir d'une bobine (2), comprenant au moins une unité de galets de base (30, 32) pour l'entreposage de la bobine (2) au cours du prélèvement d'échantillon et au moins une unité de galets de pression (40, 42) apte à venir s'appliquer par pression contre la surface latérale de la bobine (2), **caractérisé en ce que** le dispositif comprend en outre au moins un dispositif de liage de bobine (60) pour lier la bobine (2) entreposée sur ladite au moins une unité de galets de base (30, 32).

2. Dispositif selon la revendication 1, dans lequel les galets (34) de l'unité de galets de base (30, 32) et/ou les galets (44) de l'unité de galets de pression (40, 42) présentent des évidements pour le guidage de la matière de liage de bobine (64) et/ou pour la réalisation d'un canal pour le liage de la bobine.

3. Dispositif selon la revendication 1 ou 2, dans lequel les galets (34) de l'unité de galets de base (30, 32) et les galets (44) de l'unité de galets de pression (40, 42) présentent respectivement au moins deux unités de galets, si bien que l'on peut guider une matière de liage de bobine (64) et/ou on peut réaliser un canal pour le liage de la bobine entre les éléments de galets individuels.

4. Dispositif selon l'une quelconque des revendications précédentes, dans lequel on prévoit au moins une deuxième unité de galets de pression (42) qui peut venir s'appliquer par pression contre la surface latérale de la bobine (2).

5. Dispositif selon l'une quelconque des revendications précédentes, dans lequel on prévoit au moins une unité stationnaire de galets de base (30) et au moins une unité mobile de galets de base (32).

6. Dispositif selon l'une quelconque des revendications précédentes, dans lequel on prévoit un dispositif de prélèvement d'échantillon (5) pour prélever un échantillon (24) à partir de l'amorce (20) de la bobine (2).

7. Dispositif selon l'une quelconque des revendications précédentes, dans lequel on prévoit au moins un dispositif de déviation (70) pour dévier l'amorce (20) de la bobine (2) par rapport à la couche sous-jacente (22), le dispositif de déviation étant réalisé de telle sorte que l'amorce (20) de la bobine ne peut être déviée que de manière élastique par rapport à la couche sous-jacente (22).

8. Dispositif selon la revendication 7, dans lequel le dispositif de déviation (70) comprend un élément de déviation (72) qui présente une géométrie, une dimension et/ou un placement tels que l'on peut dévier l'amorce (20) de la bobine (2) avec une force (f) par rapport à la couche sous-jacente (22), telle que l'on obtient uniquement une déformation élastique de l'amorce (20).

9. Dispositif selon la revendication 8, dans lequel l'élément de déviation (72) est réalisé sous la forme d'un coin de préférence formant un angle aigu.

10. Dispositif selon l'une quelconque des revendications 7 à 9, dans lequel le dispositif de dérivation (70) peut être amené en position essentiellement tangentielle contre la surface latérale de la bobine (2) et de préférence un élément de dérivation (72) peut être amené en position essentiellement tangentielle contre la surface latérale de la bobine (2).

11. Dispositif selon l'une quelconque des revendications 7 à 10, dans lequel on prévoit un dispositif de séparation (74) pour séparer l'échantillon (24) de la bobine (2), le dispositif de séparation agissant sur l'amorce de préférence de manière essentiellement perpendiculaire à la couche sous-jacente de la bobine.

12. Dispositif selon l'une quelconque des revendications précédentes, dans lequel on prévoit des capteurs procurant une mesure directe ou indirecte afin de déterminer la position et l'orientation de l'amorce (20).

13. Procédé pour le prélèvement d'un échantillon (24) à partir d'une bobine (2), comprenant les étapes consistant à :
- déposer la bobine (2) sur au moins une unité de galets de base (30, 32) ;
- appliquer par pression au moins une unité de galets de pression (40, 42) contre la surface latérale de la bobine (2) ;
- prélever un échantillon ;
- lier la bobine (2) entreposée sur ladite au moins une unité de galets de base (30, 32) au moyen d'un dispositif de liage de bobine (60).

14. Procédé selon la revendication 13, comprenant les étapes supplémentaires consistant à :
- abaisser l'amorce (20) de la bobine (2) par rapport à la couche sous-jacente (22) de telle sorte que l'on obtient uniquement une déformation élastique de l'amorce (20) ;
- prélever un échantillon (24) à partir de l'amorce (20) de la bobine (2), qui a été soumise à une déviation de type élastique ; et
- placer l'amorce (20) contre la couche sous-jacente (22).

15. Procédé selon la revendication 14, dans lequel on calcule la force (f) à exercer de manière maximale pour l'application uniquement d'une déformation élastique, on l'établit par des essais et/ou on la détermine sur base de valeurs expérimentales.
